# EUROPÄISCHE PATENTSCHRIFT

(11) **EP 3 096 588 B1**
(45) Veröffentlichungstag und Bekanntmachung des Hinweises auf die Patenterteilung: **15.04.2020**
(21) Anmeldenummer: 16167033.6
(22) Anmeldetag: 26.04.2016
(51) Int. Cl.: H05B 3/68, A47J 36/34, F24C 15/10, H05B 6/12

(54) **KOCHFELDVORRICHTUNG**
HOTPLATE DEVICE
PLAQUE DE CUISSON

(30) Priorität: 21.05.2015 ES 201530702
(43) Veröffentlichungstag der Anmeldung: 23.11.2016
(73) Patentinhaber: BSH Hausgeräte GmbH, 81739 München (DE)
(72) Erfinder: Garcia Martinez, Jose Andres, 50014 Zaragoza (ES); Llorente Gil, Sergio, 50009 Zaragoza (ES); Marzo Alvarez, Teresa Del Carmen, 50012 Zaragoza (ES); Mir Bel, Jorge, 50019 Zaragoza (ES); Rivera Peman, Julio, 50410 Cuarte de Huerva (Zaragoza) (ES); Sancho Diaz, Francisco Javier, 50009 Zaragoza (ES); Villanueva Valero, Beatriz, 50011 Zaragoza (ES)

(56) Entgegenhaltungen:
- DE-A1- 3 630 169
- DE-C- 935 155
- DE-U1- 9 315 414
- US-A- 2 379 206
- US-A- 3 313 919
- US-B1- 6 517 037

## Beschreibung

Die Erfindung betrifft eine Kochfeldvorrichtung nach dem Patentanspruch 1, ein Kochfeld nach dem Patentanspruch 9, ein Kochsystem nach dem Patentanspruch 10 und ein Gargeschirr nach dem Patentanspruch 11.

Aus dem Stand der Technik ist bereits eine Kochfeldvorrichtung bekannt, bei welcher ein Gargeschirr an einer bevorzugten Aufstellposition aufstellbar ist. Die bevorzugte Aufstellposition ist mittels einer Markierung und/oder Beleuchtung der bevorzugten Aufstellposition kenntlich gemacht. Eine mechanische Festlegung der bevorzugten Aufstellposition ist nicht bekannt. Ein Topfhalterungssystem ist aus DE 93 15 414 U1 bekannt.

Die Aufgabe der Erfindung besteht insbesondere darin, eine gattungsgemäße Vorrichtung mit verbesserten Eigenschaften hinsichtlich von Betriebseigenschaften bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Es wird eine Matrix-Kochfeld vorgeschlagen, die dazu vorgesehen ist, in wenigstens einem Betriebszustand eine bevorzugte Aufstellposition zumindest eines Gargeschirrs auf einer Kochfeldplatte mechanisch festzulegen. Unter einer "Kochfeldvorrichtung" soll insbesondere zumindest ein Teil, insbesondere eine Unterbaugruppe, eines Kochfelds, insbesondere eines Induktionskochfelds, verstanden werden. Insbesondere kann die Kochfeldvorrichtung auch das gesamte Kochfeld, insbesondere das gesamte Induktionskochfeld, umfassen. Die Positionierungseinheit ist insbesondere dazu vorgesehen, in dem Betriebszustand eine Bewegung des Gargeschirrs ausgehend von der bevorzugten Aufstellposition, insbesondere in zumindest einer parallel und/oder senkrecht zu einer Haupterstreckungsebene der Kochfeldplatte ausgerichteten Richtung, um eine Strecke von maximal 3 cm, insbesondere von maximal 2 cm, vorteilhaft von maximal 1 cm, besonders vorteilhaft von maximal 0,5 cm und vorzugsweise von maximal 0,2 cm zuzulassen. Insbesondere ist die Positionierungseinheit dazu vorgesehen, in dem Betriebszustand eine Bewegung des Gargeschirrs ausgehend von der bevorzugten Aufstellposition, insbesondere in zumindest einer parallel und/oder senkrecht zu einer Haupterstreckungsebene der Kochfeldplatte ausgerichteten Richtung, um eine Strecke von maximal 5 %, insbesondere von maximal 3 %, vorteilhaft von maximal 1 %, besonders vorteilhaft von maximal 0,5 % und vorzugsweise von maximal 0,2 % einer Längserstreckung der Kochfeldplatte zuzulassen. Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und insbesondere durch den Mittelpunkt des Quaders verläuft. Unter einer "Längserstreckung" eines Objekts soll insbesondere eine Länge einer längsten Seite eines kleinsten gedachten geometrischen Quaders verstanden werden, welcher das Objekt gerade noch vollständig umschließt. Unter einem "Gargeschirr" soll insbesondere eine Einheit verstanden werden, welche insbesondere dazu vorgesehen ist, in wenigstens einem Betriebszustand zumindest ein Lebensmittel aufzunehmen und insbesondere in wenigstens einem Betriebszustand in direktem Kontakt mit dem Lebensmittel zu stehen. Das Lebensmittel könnte beispielsweise ein zu garendes Lebensmittel, insbesondere Gargut, und/oder ein insbesondere mechanisch, vorteilhaft ein einer über eine Beheizung hinausgehenden Weise, zu bearbeitendes Lebensmittel sein. Das Gargeschirr ist insbesondere zu einem Aufstellen auf der Kochfeldplatte zu einer Durchführung eines Heizvorgangs vorgesehen. Die Kochfeldvorrichtung weist insbesondere zumindest ein Heizelement, insbesondere zumindest ein Induktionsheizelement, auf, welches insbesondere dazu vorgesehen ist, dem Gargeschirr zu der Durchführung des Heizvorgangs zumindest Energie, insbesondere in Form eines elektromagnetischen Wechselfelds, bereitzustellen und/oder zuzuführen. Unter einer "Kochfeldplatte" soll insbesondere eine Einheit verstanden werden, die in wenigstens einem Betriebszustand zu einem Aufstellen von Gargeschirr vorgesehen ist und die insbesondere dazu vorgesehen ist, einen Teil eines Kochfeldaußengehäuses, insbesondere der Kochfeldvorrichtung und/oder eines die Kochfeldvorrichtung aufweisenden Kochfelds, auszubilden. Die Kochfeldplatte besteht insbesondere wenigstens zu einem Großteil aus Glas und/oder Glaskeramik. Unter "wenigstens zu einem Großteil" soll insbesondere zu einem Anteil von mindestens 70 %, insbesondere zu mindestens 80 %, vorteilhaft zu mindestens 90 % und vorzugsweise zu mindestens 95 % verstanden werden. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung können insbesondere vorteilhafte Betriebseigenschaften erreicht werden. Durch Festlegung einer optimalen Aufstellposition kann insbesondere eine ungewollte Bewegung des Gargeschirrs verhindert und/oder eine hohe Effizienz ermöglicht werden. Ein Lebensmittel, welches in einem an der Aufstellposition aufgestellten Gargeschirr angeordnet ist, kann insbesondere besonders vorteilhaft erhitzt und/oder erwärmt und/oder bearbeitet werden.

Ferner wird vorgeschlagen, dass die Positionierungseinheit zumindest ein Anschlagselement aufweist, das dazu vorgesehen ist, zumindest eine Anschlagsfläche für das Gargeschirr bereitzustellen. Insbesondere ist das Anschlagselement dazu vorgesehen, insbesondere mittels der Anschlagsfläche zumindest einen Teil des Gargeschirrs zu berühren. Das Anschlagselement ist insbesondere dazu vorgesehen, eine auf das Anschlagselement, insbesondere auf die Anschlagsfläche des Anschlagselements, zugerichtete Bewegung des Gargeschirrs, welche insbesondere wenigstens im Wesentlichen senkrecht zu der Anschlagsfläche ausgerichtet ist, zumindest abzubremsen und vorzugsweise zu stoppen. Dadurch kann insbesondere eine Bewegung des Gargeschirrs in Richtung eines für ein Aufstellen des Gargeschirrs ungeeigneten Bereich verhindert werden.

Zudem wird vorgeschlagen, dass die Positionierungseinheit zumindest ein Befestigungselement aufweist, das dazu vorgesehen ist, das Gargeschirr an der bevorzugten Aufstellposition zu befestigen. Beispielsweise könnte das Befestigungselement insbesondere in einer Einbaulage unterhalb der Kochfeldplatte angeordnet und beispielsweise dazu vorgesehen sein, das Gargeschirr durch zumindest eine magnetische Kraft, welche insbesondere durch die Kochfeldplatte hindurchdringen könnte, an der bevorzugten Aufstellposition zu befestigen. Das Befestigungselement ist insbesondere einstückig mit dem Anschlagselement ausgebildet und vorteilhaft dazu vorgesehen, zumindest eine Anschlagsfläche für das Gargeschirr bereitzustellen. Dadurch kann insbesondere eine hohe Betriebssicherheit und/oder eine Kindersicherung ermöglicht werden. Eine ungewollte Bewegung des Gargeschirrs relativ zu der bevorzugten Aufstellposition kann insbesondere vermieden und/oder eine hohe Energieeffizienz durch eine optimale Übereinstimmung einer Position des Gargeschirrs und einer dem Gargeschirr zugeordneten Heizzone ermöglicht werden.

Weiterhin wird vorgeschlagen, dass das Befestigungselement dazu vorgesehen ist, das Gargeschirr an der bevorzugten Aufstellposition mechanisch zu befestigen. Das Befestigungselement ist insbesondere dazu vorgesehen, zu einer Befestigung des Gargeschirrs an der bevorzugten Aufstellposition zumindest einen Teilbereich des Gargeschirrs wenigstens im Wesentlichen zu berühren. Vorteilhaft ist das Befestigungselement dazu vorgesehen, das Gargeschirr werkzeuglos lösbar an der bevorzugten Aufstellposition zu befestigen. Das Befestigungselement ist insbesondere dazu vorgesehen, das Gargeschirr an der Aufstellposition mittels einer formschlüssigen Verbindung und/oder mittels einer Klemmverbindung zu befestigen. Dadurch kann insbesondere eine hohe Stabilität erzielt werden. Insbesondere können bekannte Befestigungsmaßnahmen zu einer Befestigung des Gargeschirrs an der bevorzugten Aufstellposition verwendet werden.

Das Befestigungselement könnte beispielsweise dazu vorgesehen sein, das Gargeschirr durch eine Klemmverbindung und/oder durch eine durch Verriegelung hervorgerufene Verbindung an der bevorzugten Aufstellposition zu befestigen. Alternativ oder zusätzlich könnte das Befestigungselement insbesondere als ein Haken ausgebildet und beispielsweise dazu vorgesehen sein, in zumindest eine an dem Gargeschirr angeordnete Gargeschirrbefestigungsausnehmung einzugreifen. Alternativ könnte das Befestigungselement insbesondere als eine Befestigungsausnehmung ausgebildet und beispielsweise dazu vorgesehen sein, zumindest einen Teil eines an dem Gargeschirr angeordnete Gargeschirrbefestigungselements aufzunehmen, welches insbesondere als ein Haken ausgebildet sein könnte. Vorzugsweise ist das Befestigungselement als ein Rastelement ausgebildet. Unter einem "Rastelement" soll in diesem Zusammenhang insbesondere ein federelastisches Element zur Herstellung einer Rastverbindung verstanden werden, das dazu vorgesehen ist, bei einem Aufstellen des Gargeschirrs an der bevorzugten Aufstellposition und/oder bei einer Befestigung des Gargeschirrs an der bevorzugten Aufstellposition elastisch ausgelenkt zu werden. Dadurch kann die Befestigung des Gargeschirrs insbesondere auf eine schnelle und/oder einfache Weise hergestellt und/oder gelöst werden.

Zudem wird vorgeschlagen, dass die Kochfeldvorrichtung zumindest die Kochfeldplatte aufweist, an welcher die Positionierungseinheit in wenigstens einem montierten Zustand befestigt ist. Die Positionierungseinheit weist insbesondere zumindest ein Fixierungselement auf, das dazu vorgesehen ist, in dem montierten Zustand die Positionierungseinheit an der Kochfeldplatte zu fixieren. Das Fixierungselement ist insbesondere dazu vorgesehen, eine Bewegung der Positionierungseinheit relativ zu der Kochfeldplatte wenigstens im Wesentlichen zu verhindern. Insbesondere ist das Fixierungselement dazu vorgesehen, eine insbesondere mechanische Verbindung zwischen der Kochfeldplatte und dem Gargeschirr herzustellen. Das Fixierungselement könnte beispielsweise dazu vorgesehen sein, die Positionierungseinheit mittels einer stoffschlüssigen Verbindung, wie beispielsweise einer Klebeverbindung an der Kochfeldplatte zu befestigen. Insbesondere ist das Fixierungselement dazu vorgesehen, die Positionierungseinheit mittels einer kraftschlüssigen und/oder formschlüssigen Verbindung an der Kochfeldplatte zu befestigen. Beispielsweise könnte die Kochfeldplatte zumindest eine Befestigungsausnehmung aufweisen, welche insbesondere dazu vorgesehen sein könnte, zumindest einen Teil des Fixierungselements in dem montierten Zustand aufzunehmen. Das Fixierungselement könnte insbesondere dazu vorgesehen sein, in dem montierten Zustand wenigstens teilweise in die Befestigungsausnehmung einzugreifen und/oder wenigstens teilweise durch die Befestigungsausnehmung hindurchzugreifen. Das Fixierungselement ist insbesondere dazu vorgesehen, die Kochfeldplatte in dem montierten Zustand wenigstens teilweise zu umgreifen. Vorteilhaft ist das Fixierungselement als ein Rastelement ausgebildet und insbesondere dazu vorgesehen, die Positionierungseinheit in dem montierten Zustand an der Kochfeldplatte zu verrasten. Alternativ oder zusätzlich könnte das Fixierungselement insbesondere als ein Klemmelement ausgebildet und insbesondere dazu vorgesehen sein, die Positionierungseinheit in dem montierten Zustand durch eine Klemmverbindung an der Kochfeldplatte zu befestigen. Das Fixierungselement weist insbesondere zumindest einen Teilbereich auf, welcher in dem montierten Zustand einen Teilbereich der Kochfeldplatte umgreift. Insbesondere existiert zumindest eine Ebene, welche insbesondere senkrecht zu einer Haupterstreckungsebene der Kochfeldplatte ausgerichtet ist und innerhalb welcher das Fixierungselement die Kochfeldplatte ausgehend von einem geometrischen Schwerpunkt eines von dem Fixierungselement umgriffenen Bereichs der Kochfeldplatte über einen Winkelbereich von mindestens 90°, vorteilhaft von mindestens 120°, besonders vorteilhaft von mindestens 150° und vorzugsweise von mindestens 170° umgibt, insbesondere umschließt. Dadurch kann insbesondere eine hohe Stabilität erzielt werden. Insbesondere kann eine einfache und/oder schnelle Montage und/oder Demontage erzielt werden.

Die Positionierungseinheit weist insbesondere zumindest ein Verbindungselement auf. Das Verbindungselement könnte insbesondere unbeweglich relativ zu dem Fixierungselement und/oder in wenigstens einem montierten Zustand unbeweglich relativ zu der Kochfeldplatte angeordnet sein. Vorzugsweise weist das Verbindungselement zumindest einen ersten Elementteilbereich und zumindest einen zweiten Elementteilbereich auf. Die Elementteilbereiche sind insbesondere relativ zueinander beweglich angeordnet. Insbesondere sind die Elementteilbereiche teleskopartig angeordnet. Beispielsweise könnte einer der Elementteilbereiche wenigstens teilweise in einem weiteren der Elementteilbereiche angeordnet sein. Der erste Elementteilbereich ist insbesondere unbeweglich relativ zu dem Fixierungselement und/oder in wenigstens einem montierten Zustand unbeweglich relativ zu der Kochfeldplatte angeordnet. Insbesondere ist der zweite Elementteilbereich relativ zu dem ersten Elementteilbereich beweglich, insbesondere verschiebbar relativ, vorteilhaft in einer Längsrichtung des Verbindungselements angeordnet. Das Verbindungselement könnte insbesondere zumindest eine Skala aufweisen, welche insbesondere eine Position des zweiten Elementteilbereichs relativ zu dem ersten Elementteilbereich mit einer Größe eines zu befestigenden Gargeschirrs verknüpfen könnte. Das Verbindungselement könnte insbesondere zumindest ein Feststellelement aufweisen, welches insbesondere dazu vorgesehen sein könnte, den zweiten Elementteilbereich in der Position des zweiten Elementteilbereichs relativ zu dem ersten Elementteilbereich mechanisch festzulegen, insbesondere zu fixieren. Vorzugsweise könnten das Verbindungselement und das Befestigungselement einstückig ausgebildet sein. Alternativ könnte das Verbindungselement dazu vorgesehen sein, das Befestigungselement und das Fixierungselement miteinander zu verbinden. Dadurch kann insbesondere eine besonders komfortable Ausgestaltung erreicht werden.

Das Befestigungselement könnte insbesondere an dem Verbindungselement, insbesondere an einem dem Gargeschirr in wenigstens einem aufgestellten Zustand zugewandten Ende des Verbindungselements, angeordnet, insbesondere gelagert und/oder befestigt, sein. Die Positionierungseinheit könnte insbesondere zumindest eine Lagerungseinheit aufweisen, die insbesondere dazu vorgesehen sein könnte, das Befestigungselement relativ zu dem Verbindungselement, insbesondere in einer wenigstens im Wesentlichen parallel zu einer Haupterstreckungsebene der Kochfeldplatte ausgerichteten Richtung, schwenkbar zu lagern. Das Befestigungselement könnte insbesondere dazu vorgesehen sein, eine Position des Befestigungselements relativ zu dem Verbindungselement insbesondere in Abhängigkeit einer Form und/oder Gestalt eines zu befestigenden Gargeschirrs zu verändern. Insbesondere könnte das Befestigungselement als ein Permanentmagnet, vorteilhaft als ein magnetisch harter Permanentmagnet insbesondere mit einer breiten Hysteresekurve ausgebildet sein. Vorzugsweise könnten magnetische Eigenschaften des Befestigungselements durch ein, insbesondere von zumindest einem Induktionsheizelement bereitgestellten elektromagnetischen Wechselfeld, wenigstens im Wesentlichen unbeeinflusst bleiben. Vorteilhaft könnte das Befestigungselement dazu vorgesehen sein, das Gargeschirr magnetisch an der bevorzugten Aufstellposition zu befestigen. Unter einer "Längsrichtung" eines Objekts soll insbesondere eine Richtung verstanden werden, welche parallel zu einer längsten Seite eines kleinsten gedachten geometrischen Quaders ausgerichtet ist, welcher das Objekt gerade noch umschließt. Dadurch kann insbesondere eine hohe Flexibilität ermöglicht werden.

In einer weiteren Ausgestaltung wird vorgeschlagen, dass die Kochfeldvorrichtung zumindest die Kochfeldplatte aufweist, welche wenigstens teilweise einstückig mit der Positionierungseinheit ausgebildet ist. Insbesondere sind zumindest ein Teil der Kochfeldplatte und die Positionierungseinheit einstückig ausgebildet. Die Positionierungseinheit ist insbesondere von dem Teil der Kochfeldplatte gebildet. Beispielsweise könnte die Positionierungseinheit in einer Einbaulage als eine nach innen weisende Wölbung der Kochfeldplatte ausgebildet sein. Die nach innen weisende Wölbung könnte in einer Einbaulage insbesondere in einer auf einen Untergrund zugerichteten Richtung gewölbt sein. Der Untergrund ist insbesondere ein Boden und/oder ein Fußboden. Vorteilhaft ist die Positionierungseinheit in einer Einbaulage als eine nach außen weisende Wölbung der Kochfeldplatte ausgebildet. Die nach außen weisende Wölbung ist in einer Einbaulage insbesondere in einer von einem Untergrund weggerichteten Richtung gewölbt. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine geringe Anzahl an Baueinheiten und/oder eine stabile Ausgestaltung ermöglicht werden. Insbesondere kann auf eine Ausnehmung in der Kochfeldplatte verzichtet und/oder eine vorteilhafte Reinigung ermöglicht werden.

In einer besonders vorteilhaften Ausgestaltung wird vorgeschlagen, dass die Positionierungseinheit wenigstens teilweise, insbesondere wenigstens im Wesentlichen und vorzugsweise gänzlich einstückig ausgebildet ist. Insbesondere sind das Fixierungselement und/oder das Anschlagselement und/oder das Befestigungselement und/oder das Verbindungselement einstückig ausgebildet. Dadurch kann insbesondere eine hohe Stabilität erzielt werden.

Ferner wird vorgeschlagen, dass die Kochfeldvorrichtung zumindest eine Versorgungseinheit aufweist, die dazu vorgesehen ist, zumindest einen Verbraucher des an der Aufstellposition aufgestellten Gargeschirrs mit Energie zu versorgen. Die Versorgungseinheit ist insbesondere dazu vorgesehen, in wenigstens einem Betriebszustand eine Antriebsenergie zu einem Antrieb des Verbrauchers bereitzustellen. Das Gargeschirr weist insbesondere den Verbraucher auf. Vorteilhaft ist der Verbraucher als eine Lebensmittelbearbeitungseinheit ausgebildet. Insbesondere ist die Versorgungseinheit in einem Nahbereich der bevorzugten Aufstellposition angeordnet. Beispielsweise könnte die Versorgungseinheit dazu vorgesehen sein, in dem Betriebszustand zumindest ein wenigstens im Wesentlichen um zumindest eine Drehachse rotierendes Magnetfeld zu einem Antrieb des Verbrauchers bereitzustellen. Die Versorgungseinheit könnte beispielsweise zumindest einen Permanentmagneten und zumindest einen Motor, insbesondere zumindest einen Elektromotor, aufweisen, welcher dazu vorgesehen sein könnte, in dem Betriebszustand den Permanentmagneten zu dem Antrieb des Verbrauchers rotatorisch um die Drehachse zu bewegen. Alternativ oder zusätzlich könnte die Versorgungseinheit zumindest zwei, insbesondere zumindest drei, vorteilhaft zumindest fünf und vorzugsweise eine Vielzahl an Elektromagnete aufweisen, welche in dem Betriebszustand insbesondere um die Drehachse herum angeordnet und vorteilhaft dazu vorgesehen sein könnten, das wenigstens im Wesentlichen um die Drehachse rotierende Magnetfeld bereitzustellen. Insbesondere könnte eine Steuereinheit, welche insbesondere Teil der Kochfeldvorrichtung sein könnte, dazu vorgesehen sein, bei einer Anzahl von n Elektronmagneten die Elektromagnete phasenversetzt, insbesondere in einem Phasenversatz von wenigstens im Wesentlichen 360°/n, insbesondere mittels Pulsweitenmodulation anzusteuern. Die Versorgungseinheit könnte alternativ oder zusätzlich dazu vorgesehen sein, die Antriebsenergie zu dem Antrieb des Verbrauchers mechanisch bereitzustellen. Beispielsweise könnte die Versorgungseinheit zumindest einen Motor, insbesondere zumindest einen Elektromotor, aufweisen, welcher dazu vorgesehen sein könnte, in dem Betriebszustand eine rotatorische Antriebsenergie zu einem rotatorischen Antrieb des Verbrauchers bereitzustellen. Der Motor könnte insbesondere zumindest ein Abgriffselement rotatorisch antreiben, welches insbesondere dazu vorgesehen sein könnte, die Antriebsenergie zu einem mechanischen Abgriff bereitzustellen. Dadurch kann ein Verbraucher eines an der bevorzugten Aufstellposition aufgestellten Gargeschirrs insbesondere in einfacher und/oder effizienter Weise mit Energie versorgt werden. Insbesondere kann eine hohe Funktionstüchtigkeit durch eine exakte Übereinstimmung der Positionen der Versorgungseinheit und des zu versorgenden Verbrauchers erreicht werden.

Unter einer "Lebensmittelbearbeitungseinheit" soll insbesondere eine Einheit verstanden werden, welche dazu vorgesehen ist, in wenigstens einem Betriebszustand zumindest ein Lebensmittel, welches insbesondere in dem Lebensmittelaufnahmeraum angeordnet ist, insbesondere in einer über eine reine Beheizung hinausgehenden Weise, zu bearbeiten, und welche insbesondere zumindest ein Bearbeitungswerkzeug aufweist, welches dazu vorgesehen ist, in wenigstens einem Betriebszustand in direktem Kontakt mit dem Lebensmittel zu stehen. Das Bearbeitungswerkzeug ist insbesondere dazu vorgesehen, in wenigstens einem Betriebszustand zumindest ein in dem Lebensmittelaufnahmeraum angeordnetes Lebensmittel zu bearbeiten, insbesondere zu mixen und/oder zu verrühren und/oder zu mahlen und/oder zu zerkleinern und/oder zu vermischen und/oder zu emulgieren und/oder zu kneten und/oder zu zerschneiden. Das Bearbeitungswerkzeug ist insbesondere dazu vorgesehen, in wenigstens einem Betriebszustand zumindest ein in dem Lebensmittelaufnahmeraum angeordnetes Lebensmittel insbesondere ausgehend von zumindest einem ruhenden Zustand in Bewegung zu versetzen und/oder insbesondere ausgehend von einem bewegten Zustand in Bewegung zu halten. In wenigstens einem Betriebszustand der Lebensmittelbearbeitungseinheit ist insbesondere zumindest ein Teil der Lebensmittelbearbeitungseinheit, insbesondere das Bearbeitungswerkzeug, dazu vorgesehen, in direktem Kontakt mit dem Lebensmittel zu stehen. Die Lebensmittelbearbeitungseinheit ist insbesondere dazu vorgesehen, unterschiedliche Arten und/oder Konsistenzen von Lebensmitteln zu bearbeiten, wie beispielsweise Teig und/oder Flüssigkeit und/oder zumindest teilweise fluide Materialien und/oder Saucen und/oder zumindest teilweise feste Lebensmittel. Insbesondere weist die Lebensmittelbearbeitungseinheit mindestens zwei, insbesondere mindestens drei, vorteilhaft mindestens fünf und vorzugsweise mindestens sieben verschiedene Bearbeitungswerkzeuge auf.

Insbesondere wird vorgeschlagen, dass die Kochfeldvorrichtung zumindest eine Induktionseinheit aufweist, die insbesondere dazu vorgesehen ist, in wenigstens einem Betriebszustand zumindest Energie, insbesondere in Form eines elektromagnetischen Wechselfelds, an das Gargeschirr bereitzustellen. Insbesondere ist die Induktionseinheit in einem Nahbereich der bevorzugten Aufstellposition angeordnet. Unter einer "Induktionseinheit" soll insbesondere eine Einheit verstanden werden, welche dazu vorgesehen ist, in wenigstens einem Betriebszustand zumindest ein elektromagnetisches Wechselfeld zu einer Energieübertragung bereitzustellen. Die Induktionseinheit ist insbesondere dazu vorgesehen, in wenigstens einem Betriebszustand mittels des elektromagnetischen Wechselfelds in einer Empfangseinheit des Gargeschirrs und/oder in einem Teil einer Gargeschirrgehäuseeinheit des Gargeschirrs zumindest einen Induktionsstrom zu erzeugen und/oder hervorzurufen. Das Gargeschirr könnte insbesondere zumindest eine Empfangseinheit aufweisen, welche insbesondere dazu vorgesehen sein könnte, von der Induktionseinheit bereitgestellte Energie, insbesondere in Form einer elektromagnetischen Wechselfelds, zu empfangen und vorteilhaft mittels dieser Energie den Verbraucher zu versorgen. Beispielsweise könnte die Induktionseinheit zumindest ein von einem Induktionsheizelement verschieden ausgebildetes Energieübertragungselement aufweisen, das insbesondere dazu vorgesehen sein könnte, in wenigstens einem Betriebszustand die Energie, insbesondere das elektromagnetische Wechselfeld, an das Gargeschirr, insbesondere an die Empfangseinheit des Gargeschirrs, bereitzustellen. Insbesondere könnte das Energieübertragungselement zumindest einen Induktor und/oder zumindest eine Spule aufweisen. Das Energieübertragungselement könnte insbesondere dazu vorgesehen sein, in wenigstens einem Betriebszustand die Energie zumindest mittels einer induktiven Energieübertragung bereitzustellen. Insbesondere weist die Induktionseinheit zumindest ein Induktionsheizelement auf, das insbesondere dazu vorgesehen ist, in wenigstens einem Betriebszustand die Energie an das Gargeschirr bereitzustellen. Insbesondere ist das Induktionsheizelement dazu vorgesehen, in wenigstens einem Betriebszustand, insbesondere zusätzlich zu der Bereitstellung von Energie an das Gargeschirr, zumindest einen Teil des Gargeschirrs zu erhitzen. Unter einem "Induktionsheizelement" soll in diesem Zusammenhang insbesondere ein Element verstanden werden, welches dazu vorgesehen ist, ein elektromagnetisches Wechselfeld insbesondere mit einer Frequenz zwischen 20 kHz und 100 kHz zu erzeugen, das insbesondere dazu vorgesehen ist, in einem aufgestellten, insbesondere metallischen, vorzugsweise ferromagnetischen Gargeschirrboden durch Wirbelstrominduktion und/oder Ummagnetisierungseffekte in Wärme umgewandelt zu werden. Dadurch kann insbesondere ein hoher Komfort erreicht werden.

Das Gargeschirr weist insbesondere zumindest eine Gargeschirrgehäuseeinheit auf, welche insbesondere zumindest einen Lebensmittelaufnahmeraum definiert. Die Gargeschirrgehäuseeinheit weist insbesondere zumindest ein Innengehäuseteil auf, welches insbesondere dem Lebensmittelaufnahmeraum zugewandt angeordnet ist und vorteilhaft den Lebensmittelaufnahmeraum wenigstens im Wesentlichen begrenzt. Insbesondere weist die Gargeschirrgehäuseeinheit zumindest ein Außengehäuseteil auf, welches insbesondere dem Lebensmittelaufnahmeraum abgewandt angeordnet ist und vorteilhaft eine äußere, insbesondere für einen Bediener in einem Betriebszustand sichtbare Gestalt der Gargeschirrgehäuseeinheit und insbesondere des Gargeschirrs definiert. Das Gargeschirr könnte insbesondere zumindest eine Empfangseinheit aufweisen, welche insbesondere zu einem Empfang von Energie, insbesondere in Form eines elektromagnetischen Wechselfelds, und vorzugsweise zu einer induktiven Energieübertragung vorgesehen sein könnte. Insbesondere könnte die Empfangseinheit dazu vorgesehen sein, zumindest einen Verbraucher, wie beispielsweise die Lebensmittelbearbeitungseinheit und/oder zumindest ein Heizelement des Gargeschirrs und/oder zumindest eine Ausgabeeinheit des Gargeschirrs und/oder zumindest eine Antriebseinheit des Gargeschirrs, welche insbesondere zu einem Antrieb der Lebensmittelbearbeitungseinheit vorgesehen sein könnte, mit Energie zu versorgen. Die Versorgungseinheit könnte insbesondere dazu vorgesehen sein, die Energie an die Empfangseinheit des Gargeschirrs zu übertragen. Insbesondere könnte die Empfangseinheit dazu vorgesehen sein, mittels der von der Versorgungseinheit übertragenen Energie zumindest die Antriebseinheit zu versorgen.

Vorteilhaft ist zumindest ein Induktionsheizelement, insbesondere der Induktionseinheit, dazu vorgesehen, dem Gargeschirr die Energie in Form von Heizenergie bereitzustellen. Beispielsweise könnte das Induktionsheizelement dazu vorgesehen sein, in dem Betriebszustand zumindest einen Teilbereich der Gargeschirrgehäuseeinheit des Gargeschirrs mittels der Heizenergie zu erwärmen. Das Induktionsheizelement könnte insbesondere dazu vorgesehen sein, in dem Betriebszustand das Innengehäuseteil der Gargeschirrgehäuseeinheit direkt zu erwärmen. Alternativ könnte das Induktionsheizelement insbesondere dazu vorgesehen sein, in dem Betriebszustand die Heizenergie in Form des elektromagnetischen Wechselfelds an eine Empfangseinheit des Gargeschirrs zu übertragen. Die Empfangseinheit könnte insbesondere dazu vorgesehen sein, mit der von dem Induktionsheizelement bereitgestellten Heizenergie zumindest ein Heizelement des Gargeschirrs zu versorgen. Das Heizelement des Gargeschirrs könnte insbesondere dazu vorgesehen sein, in dem Betriebszustand einen Teilbereich des Gehäuses des Gargeschirrs, insbesondere das Innengehäuseteil der Gargeschirrgehäuseeinheit, zu erwärmen. Dadurch kann insbesondere ein hoher Komfort erreicht werden. Insbesondere kann im Wesentlichen zeitgleich eine Bearbeitung eines in dem Lebensmittelaufnahmeraum angeordneten Lebensmittels und eine Erhitzung und/oder Garung des Lebensmittels durchgeführt werden.

Beispielsweise könnte das Induktionsheizelement ein Teil eines klassischen Kochfelds sein, bei welchem insbesondere Heizzonen markiert sein könnten, wie beispielsweise durch eine Markierung der Kochfeldplatte und/oder durch zumindest eine Lichtquelle, welche in einer Einbaulage unterhalb der Kochfeldplatte angeordnet sein könnte. Vorzugsweise ist das Induktionsheizelement Teil eines variablen Kochflächenbereichs. Dadurch kann insbesondere eine hohe Flexibilität erreicht werden.

Ein hoher Komfort kann insbesondere durch ein Kochfeld erreicht werden, das zumindest eine erfindungsgemäße Kochfeldvorrichtung aufweist.

Es wird zudem ein Kochsystem mit zumindest einer erfindungsgemäßen Kochfeldvorrichtung und mit zumindest dem Gargeschirr vorgeschlagen, wodurch insbesondere vorteilhafte Betriebseigenschaften erreicht werden können.

Die vorteilhaften Betriebseigenschaften können weiter gesteigert werden, durch ein Gargeschirr für ein erfindungsgemäßes Kochsystem. Das Gargeschirr weist vorteilhaft zumindest eine Gargeschirrpositionierungseinheit auf, die dazu vorgesehen ist, mit der Positionierungseinheit zu kooperieren. Die Gargeschirrpositionierungseinheit ist insbesondere zu der Positionierungseinheit korrespondierend ausgebildet. Die Gargeschirrpositionierungseinheit ist insbesondere mit der Gargeschirrgehäuseeinheit verbunden. Beispielsweise könnte die Gargeschirrpositionierungseinheit an der Gargeschirrgehäuseeinheit befestigt sein. Vorteilhaft ist die Gargeschirrpositionierungseinheit wenigstens teilweise einstückig mit der Gargeschirrgehäuseeinheit ausgebildet. Die Gargeschirrpositionierungseinheit weist insbesondere zumindest ein Gargeschirrbefestigungselement auf, das insbesondere dazu vorgesehen ist, mit dem Befestigungselement zu wechselwirken. Insbesondere sind das Befestigungselement und das Gargeschirrbefestigungselement korrespondierend zueinander ausgebildet. Das Befestigungselement und das Gargeschirrbefestigungselement sind in wenigstens einem aufgestellten Zustand insbesondere formschlüssig und/oder kraftschlüssig miteinander verbunden. Vorteilhaft sind das Befestigungselement und das Gargeschirrbefestigungselement in dem aufgestellten Zustand ineinandergreifend angeordnet.

Die Kochfeldvorrichtung soll hierbei nicht auf die oben beschriebene Anwendung und Ausführungsform beschränkt sein. Insbesondere kann die Kochfeldvorrichtung zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Kochfeldvorrichtung in einer schematischen Draufsicht,
- Fig. 2: einen Ausschnitt eines Kochsystems mit der Kochfeldvorrichtung und mit einem Gargeschirr in einer stark vereinfachten Schnittdarstellung,
- Fig. 3: ein alternatives Kochsystem mit einer Kochfeldvorrichtung und mit einem Gargeschirr in einer schematischen Draufsicht,
- Fig. 4: einen Ausschnitt des Kochsystems mit der Kochfeldvorrichtung und mit dem Gargeschirr in einer stark vereinfachten Schnittdarstellung,
- Fig. 5: ein alternatives Kochfeld mit einer Kochfeldvorrichtung und mit einem Gargeschirr in einer schematischen Draufsicht,
- Fig. 6: einen Ausschnitt des Kochsystems mit der Kochfeldvorrichtung und mit dem Gargeschirr in einer stark vereinfachten Schnittdarstellung,
- Fig. 7: ein alternatives Kochfeld mit einer Kochfeldvorrichtung in einer schematischen Draufsicht,
- Fig. 8: ein alternatives Kochfeld mit einer Kochfeldvorrichtung in einem montierten Zustand in einer schematischen Draufsicht,
- Fig. 9: das Kochsystem mit der Kochfeldvorrichtung und mit einem Gargeschirr in einem aufgestellten Zustand in einer schematischen Draufsicht und
- Fig. 10: einen Ausschnitt des Kochsystems mit der Kochfeldvorrichtung und mit dem Gargeschirr in einer stark vereinfachten Schnittdarstellung.

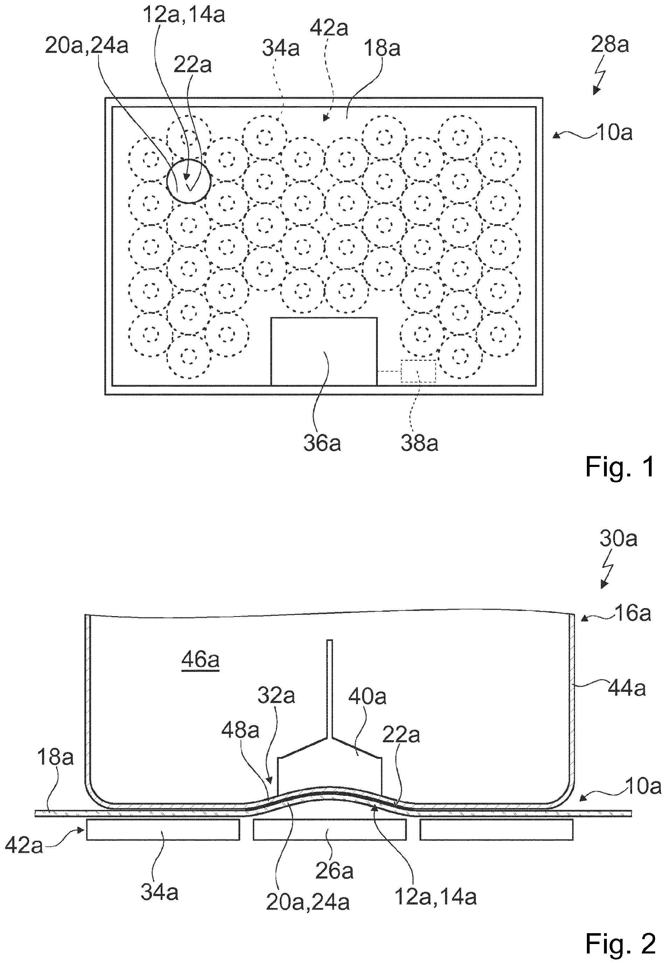

Fig. 1 zeigt ein Kochfeld 28a, das als ein Induktionskochfeld ausgebildet ist, mit einer Kochfeldvorrichtung 10a, die als eine Induktionskochfeldvorrichtung ausgebildet ist. Die Kochfeldvorrichtung 10a weist eine Kochfeldplatte 18a auf. In einem montierten Zustand bildet die Kochfeldplatte 18a einen Teil eines Kochfeldaußengehäuses aus. Die Kochfeldplatte 18a ist zu einem Aufstellen von Gargeschirr 16a vorgesehen.
Die Kochfeldvorrichtung 10a weist mehrere Heizelemente 34a auf. Von mehrfach vorhandenen Objekten ist in den Figuren jeweils lediglich eines mit einem Bezugszeichen versehen. Erfindungsgemäss sind die Heizelemente 34a in Form einer Matrix angeordnet. Die Heizelemente 34a sind Teil eines variablen Kochflächenbereichs.

Im vorliegenden Ausführungsbeispiel weist die Kochfeldvorrichtung 10a achtundvierzig Heizelemente 34a auf. Die Heizelemente 34a sind dazu vorgesehen, auf der Kochfeldplatte 18a oberhalb der Heizelemente 34a aufgestelltes Gargeschirr 16a zu erhitzen. Die Heizelemente 34a sind als Induktionsheizelemente ausgebildet. Die Kochfeldvorrichtung 10a weist eine Induktionseinheit 42a auf. Die als Induktionsheizelemente ausgebildeten Heizelemente 34a sind Teil der Induktionseinheit 42a.
Die Kochfeldvorrichtung 10a weist eine Bedienerschnittstelle 36a zu einer Eingabe und/oder Auswahl von Betriebsparametern auf, beispielsweise einer Heizleistung und/oder einer Heizleistungsdichte und/oder einer Heizzone. Die Bedienerschnittstelle 36a ist zu einer Ausgabe eines Werts eines Betriebsparameters an einen Bediener vorgesehen.
Die Kochfeldvorrichtung 10a weist eine Steuereinheit 38a auf. Die Steuereinheit 38a ist dazu vorgesehen, in Abhängigkeit von mittels der Bedienerschnittstelle 36a eingegebener Betriebsparameter Aktionen auszuführen und/oder Einstellungen zu verändern. Die Steuereinheit 38a regelt in einem Betriebszustand eine Energiezufuhr zu den Heizelementen 34a.
Die Kochfeldvorrichtung 10a ist Teil eines Kochsystems 30a, das als ein Induktionskochsystem ausgebildet ist (vgl. Fig. 2). Das Kochsystem 30a weist die Kochfeldvorrichtung 10a auf. Das Kochsystem 30a weist ein Gargeschirr 16a auf. Das Gargeschirr 16a ist für das Kochsystem 30a vorgesehen.
Das Gargeschirr 16a ist zu einem Aufstellen auf der Kochfeldplatte 18a vorgesehen. Das Gargeschirr 16a weist eine Gargeschirrgehäuseeinheit 44a auf (vgl. Fig. 2). Die Gargeschirrgehäuseeinheit 44a definiert einen Lebensmittelaufnahmeraum 46a.

Die Kochfeldvorrichtung 10a weist eine Positionierungseinheit 12a auf (vgl. Fig. 1 und 2). In dem Betriebszustand legt die Positionierungseinheit 12a eine bevorzugte Aufstellposition 14a des Gargeschirrs 16a auf der Kochfeldplatte 18a mechanisch fest.

Im vorliegenden Ausführungsbeispiel ist die Positionierungseinheit 12a stoffschlüssig mit der Kochfeldplatte 18a verbunden. Die Positionierungseinheit 12a ist teilweise einstückig mit der Kochfeldplatte 18a ausgebildet (vgl. Fig. 2).

Die Positionierungseinheit 12a ist als eine Wölbung der Kochfeldplatte 18a ausgebildet. Die Positionierungseinheit 12a ist als eine nach außen weisende Wölbung der Kochfeldplatte 18a ausgebildet. In einer Einbaulage weist die Wölbung in eine von einem Untergrund weggerichtete Richtung.

Die Positionierungseinheit 12a weist ein Anschlagselement 20a auf (vgl. Fig. 2). Das Anschlagselement 20a bildet eine Oberfläche der Kochfeldplatte 18a an der bevorzugten Aufstellposition 14a aus. Das Anschlagselement 20a stellt eine Anschlagsfläche 22a für das Gargeschirr 16a bereit. In einem aufgestellten Zustand berührt das Anschlagselement 20a eine Oberfläche eines Gargeschirrbodens des Gargeschirrs 16a.

Die Positionierungseinheit 12a weist ein Befestigungselement 24a auf (vgl. Fig. 2). Das Befestigungselement 24a ist einstückig mit der Kochfeldplatte 18a an der bevorzugten Aufstellposition 14a ausgebildet. Das Anschlagselement 20a und das Befestigungselement 24a sind einstückig ausgebildet.

Das Befestigungselement 24a befestigt das Gargeschirr 16a an der bevorzugten Aufstellposition 14a. In dem aufgestellten Zustand befestigt das Befestigungselement 24a das Gargeschirr 16a mittels eines Formschlusses. Das Befestigungselement 24a befestigt das Gargeschirr 16a mechanisch an der bevorzugten Aufstellposition 14a.

Das Gargeschirr 16a weist eine zu der Positionierungseinheit 12a korrespondierende Gargeschirrpositionierungseinheit 32a auf (vgl. Fig. 2). In dem aufgestellten Zustand kooperiert die Gargeschirrpositionierungseinheit 32a mit der Positionierungseinheit 12a.

Im vorliegenden Ausführungsbeispiel weist die Gargeschirrpositionierungseinheit 32a ein Gargeschirrbefestigungselement 48a auf. Das Gargeschirrbefestigungselement 48a ist korrespondierend zu dem Befestigungselement 24a ausgebildet. Das Gargeschirrbefestigungselement 48a ist als eine in Richtung des Lebensmittelaufnahmeraums 46a gerichtete Wölbung ausgebildet. In dem aufgestellten Zustand berührt das Gargeschirrbefestigungselement 48a das Anschlagselement 20a.

Das Gargeschirr 16a weist einen Verbraucher 40a auf. Der Verbraucher 40a ist zu einem Großteil in dem Lebensmittelaufnahmeraum 46a angeordnet. Im vorliegenden Ausführungsbeispiel ist der Verbraucher 40a als eine Lebensmittelbearbeitungseinheit ausgebildet.

Die Kochfeldvorrichtung 10a weist eine Versorgungseinheit 26a auf. Die Versorgungseinheit 26a ist in der Einbaulage unterhalb der Kochfeldplatte 18a angeordnet. In dem aufgestellten Zustand versorgt die Versorgungseinheit 26a den Verbraucher 40a des an der Aufstellposition 14a aufgestellten Gargeschirrs 16a mit Energie.

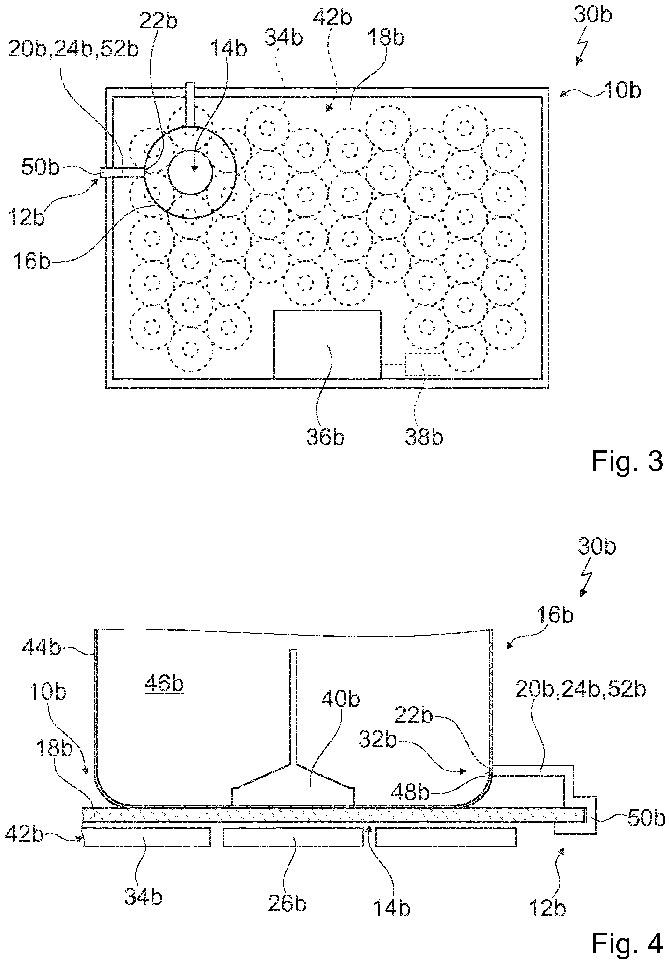

In Fig. 3 bis 10 sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 und 2 verwiesen werden kann. Zur Unterscheidung der Ausführungsbeispiele ist der Buchstabe a in den Bezugszeichen des Ausführungsbeispiels in den Fig. 1 und 2 durch die Buchstaben b bis e in den Bezugszeichen des Ausführungsbeispiels der Fig. 3 bis 10 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 und 2 verwiesen werden.

Fig. 3 zeigt ein Kochsystem 30b mit einer Kochfeldvorrichtung 10b und mit einem Gargeschirr 16b. Die Kochfeldvorrichtung 10b weist zwei Positionierungseinheiten 12b auf. Die Positionierungseinheiten 12b sind an unterschiedlichen Seiten einer Kochfeldplatte 18b angeordnet. Die Seiten der Kochfeldplatte 18b, an welchen die Positionierungseinheiten 12b angeordnet sind, sind im Wesentlichen senkrecht zueinander ausgerichtet.

Die Positionierungseinheiten 12b sind an einander zugewandten Endbereichen der jeweiligen Seite der Kochfeldplatte 18b angeordnet. Gemeinsam legen die Positionierungseinheiten 12b in einem Betriebszustand eine bevorzugte Aufstellposition 14b des Gargeschirrs 16b auf der Kochfeldplatte 18b mechanisch fest. Im Folgenden wird lediglich eine der Positionierungseinheiten 12b beschrieben.

Die Positionierungseinheit 12b weist ein Anschlagselement 20b auf, das eine Anschlagsfläche 22b für das Gargeschirr 16b bereitstellt. In einem aufgestellten Zustand berührt das Anschlagselement 20b eine Oberfläche einer Gargeschirrseitenwand des Gargeschirrs 16b.

In einem montierten Zustand ist die Positionierungseinheit 12b an der Kochfeldplatte 18b befestigt. Die Positionierungseinheit 12b weist ein Fixierungselement 50b auf (vgl. Fig. 4). Das Fixierungselement 50b fixiert die Positionierungseinheit 12b an der Kochfeldplatte 18b. In einem montierten Zustand fixiert das Fixierungselement 50b die Positionierungseinheit 12b mittels einer formschlüssigen Verbindung. Im vorliegenden Ausführungsbeispiel ist das Fixierungselement 50b als ein Klemmelement ausgebildet. Das Fixierungselement 50b fixiert die Positionierungseinheit 12b mittels einer Klemmverbindung an der Kochfeldplatte 18b.

Das Fixierungselement 50b und das Anschlagselement 20b sind miteinander verbunden. Das Anschlagselement 20b ist an einem der Kochfeldplatte 18b in dem montierten Zustand abgewandten Bereich des Fixierungselements 50b angeordnet. Das Fixierungselement 50b und das Anschlagselement 20b sind einstückig miteinander verbunden.

Die Positionierungseinheit 12b weist ein Verbindungselement 52b auf (vgl. Fig. 4). Das Verbindungselement 52b verbindet das Fixierungselement 50b und ein Befestigungselement 24b miteinander. Das Verbindungselement 52b ist teleskopartig ausgebildet. Im vorliegenden Ausführungsbeispiel sind das Verbindungselement 52b und das Befestigungselement 24b einstückig ausgebildet.

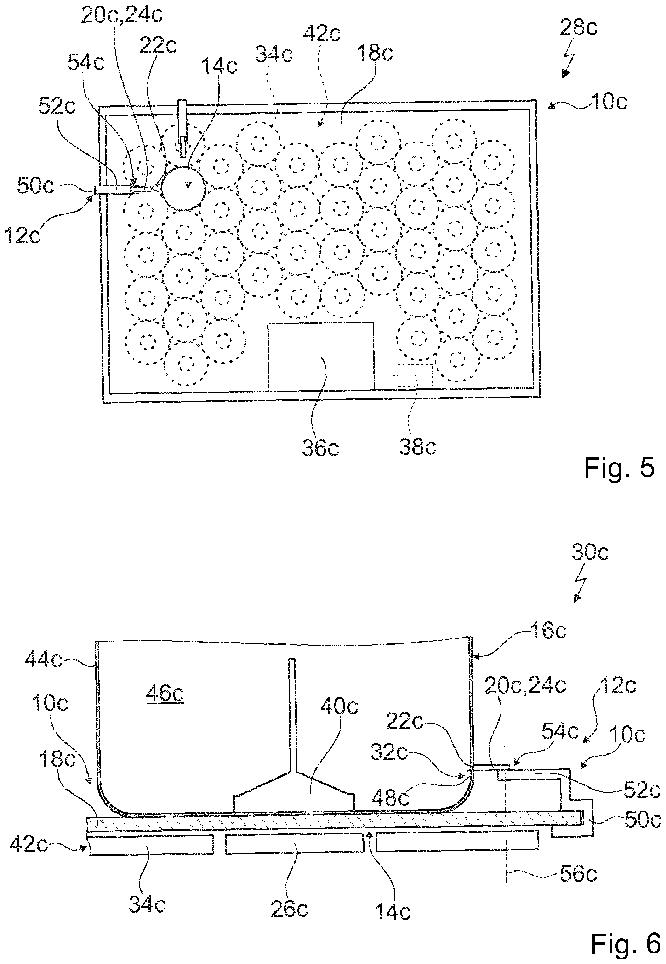

Fig. 5 zeigt ein Kochfeld 28c mit einer Kochfeldvorrichtung 10c, die Teil eines Kochsystems 30c ist, welches ein Gargeschirr 16c aufweist. Eine Positionierungseinheit 12c der Kochfeldvorrichtung 10c weist ein Verbindungselement 52c auf. Das Verbindungselement 52c verbindet ein Fixierungselement 50c und ein Befestigungselement 24c miteinander. Das Befestigungselement 24c ist an dem Verbindungselement 52c angeordnet.

Die Positionierungseinheit 12c weist eine Lagerungseinheit 54c auf. Die Lagerungseinheit 54c lagert das Befestigungselement 24c beweglich relativ zu dem Verbindungselement 52c. Das Befestigungselement 24c ist durch die Lagerungseinheit 54c schwenkbar relativ zu dem Verbindungselement 52c gelagert. Die Lagerungseinheit 54c lagert das Befestigungselement 24c schwenkbar um eine Schwenkachse 56c relativ zu dem Verbindungselement 52c (vgl. Fig. 6).

Das Befestigungselement 24c ist als ein Permanentmagnet ausgebildet. In einem aufgestellten Zustand befestigt das Befestigungselement 24c das Gargeschirr 16c magnetisch an einer bevorzugten Aufstellposition 14c.

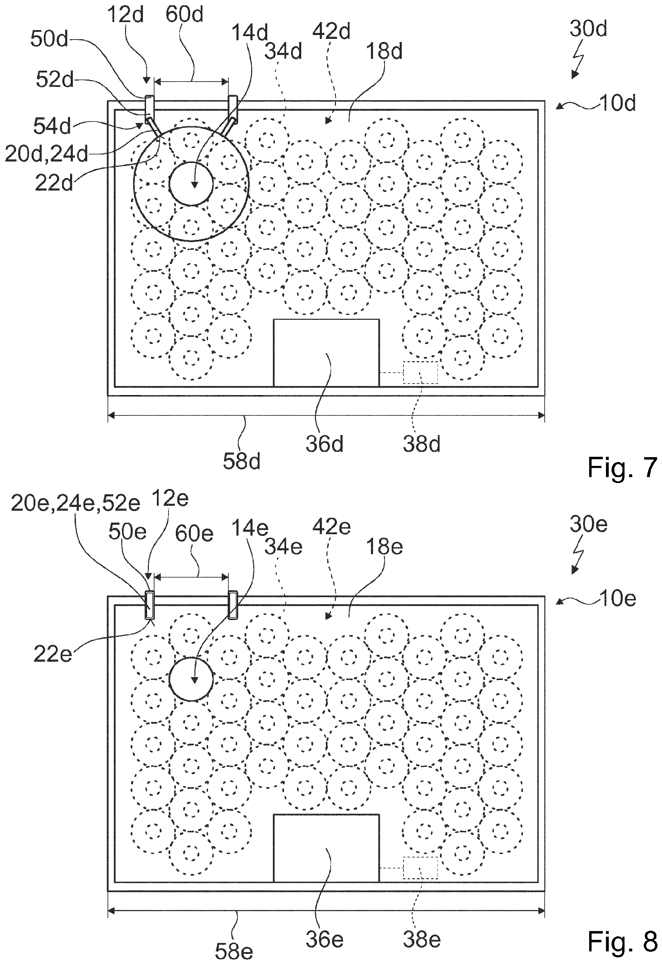

Fig. 7 zeigt ein Kochsystem 30d mit einer Kochfeldvorrichtung 10d und mit einem Gargeschirr 16d. Die Kochfeldvorrichtung 10d weist zwei Positionierungseinheiten 12d auf. Die Positionierungseinheiten 12d sind an der gleichen Seite einer Kochfeldplatte 18d angeordnet. In einem montierten Zustand sind die Positionierungseinheiten 12d benachbart zueinander angeordnet.

Die Kochfeldplatte 18d weist eine Längserstreckung 58d auf. Die Positionierungseinheiten 12d weisen einen Abstand 60d zueinander auf. Im vorliegenden Ausführungsbeispiel beträgt der Abstand 60d zwischen den Positionierungseinheiten 12d im Wesentlichen 16 % der Längserstreckung 58d der Kochfeldplatte 18d.

Fig. 8 zeigt ein Kochfeld 28e mit einer Kochfeldvorrichtung 10e. Die Kochfeldvorrichtung 10e weist zwei Positionierungseinheiten 12e auf. Die Positionierungseinheiten 12e sind in einem montierten Zustand benachbart zueinander angeordnet. Von den Positionierungseinheiten 12e wird im Folgenden lediglich eine beschrieben.

Ein Fixierungselement 50e der Positionierungseinheit 12e fixiert die Positionierungseinheit 12e an einer Kochfeldplatte 18e. Die Kochfeldplatte 18e weist eine Fixierungsausnehmung auf. Die Fixierungsausnehmung ist in einer Einbaulage auf einer einem Bediener abgewandten Seite der Kochfeldplatte 18e angeordnet. Das Fixierungselement 50e ist als ein Rastelement ausgebildet. Die Fixierungsausnehmung ist als eine Rastausnehmung ausgebildet.

Ein Anschlagselement 20e der Positionierungseinheit 12e und ein Befestigungselement 24e der Positionierungseinheit 12e sind einstückig ausgebildet. Das Befestigungselement 24e und ein Verbindungselement 52e der Positionierungseinheit 12e sind einstückig ausgebildet.

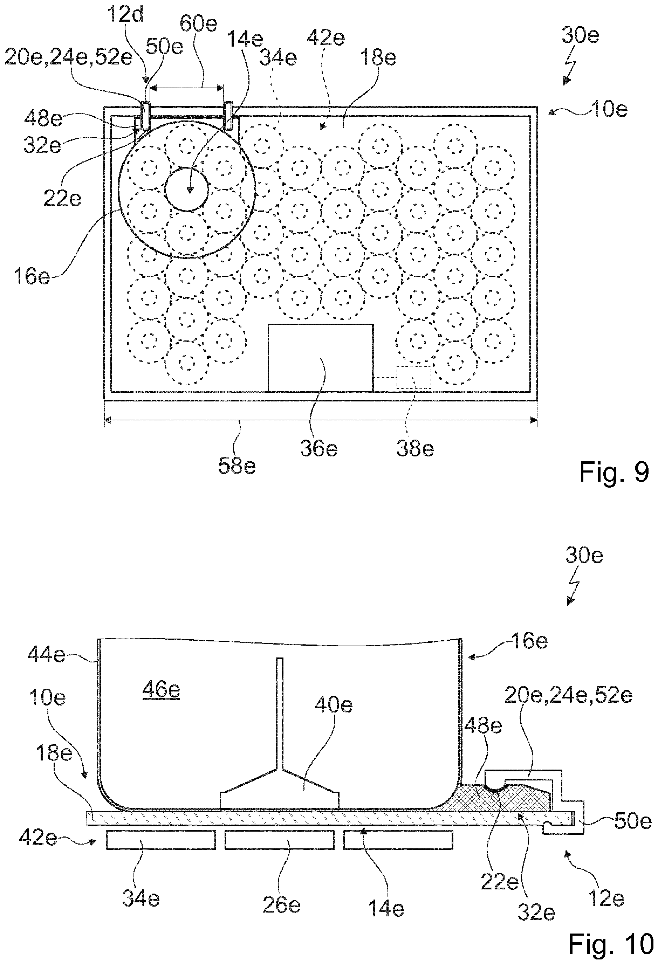

Das Befestigungselement 24e befestigt ein Gargeschirr 16e eines Kochsystems 30e mechanisch an einer bevorzugten Aufstellposition 14e. Im vorliegenden Ausführungsbeispiel befestigt das Befestigungselement 24e das Gargeschirr 16e mittels einer Rastverbindung. Das Befestigungselement 24e ist als ein Rastelement ausgebildet. Das Gargeschirr 16e weist eine zu der Positionierungseinheit 12e korrespondierende Gargeschirrpositionierungseinheit 32e auf (vgl. Fig. 9 und 10). In einem aufgestellten Zustand kooperiert die Gargeschirrpositionierungseinheit 32e mit der Positionierungseinheit 12e.
Die Gargeschirrpositionierungseinheit 32e weist ein Gargeschirrbefestigungselement 48e auf. Das Gargeschirrbefestigungselement 48e ist korrespondierend zu dem Befestigungselement 24e ausgebildet. Das Gargeschirrbefestigungselement 48a ist einstückig mit einer Gargeschirrgehäuseeinheit 44e des Gargeschirrs 16e ausgebildet.

In dem aufgestellten Zustand wechselwirken das Befestigungselement 24e und das Gargeschirrbefestigungselement 48e miteinander. Das Gargeschirrbefestigungselement 48e bildet eine Rastausnehmung aus. In dem aufgestellten Zustand sind das Befestigungselement 24e und das Gargeschirrbefestigungselement 48e ineinandergreifend angeordnet. Ein Teil des Befestigungselements 24e greift in dem aufgestellten Zustand in das Gargeschirrbefestigungselement 48e teilweise ein.

Es sind beliebige Kombinationen der Positionierungseinheiten der Ausführungsbeispiele mit den Buchstaben a bis e denkbar. Beispielsweise könnte das Fixierungselement des Ausführungsbeispiels der Fig. 3 und 4 mit jedem Befestigungselement und/oder Anschlagselement und/oder Fixierungselement der Positionierungseinheiten der Ausführungsbeispiele der Fig. 5 bis 10 kombiniert werden. Analog hierzu könnte das Fixierungselement des Ausführungsbeispiels der Fig. 8 bis 10 mit jedem Befestigungselement und/oder Anschlagselement und/oder Fixierungselement der Positionierungseinheiten der Ausführungsbeispiele der Fig. 3 bis 7 kombiniert werden.

### Bezugszeichen

- 10: Kochfeldvorrichtung
- 12: Positionierungseinheit
- 14: Aufstellposition
- 16: Gargeschirr
- 18: Kochfeldplatte
- 20: Anschlagselement
- 22: Anschlagsfläche
- 24: Befestigungselement
- 26: Versorgungseinheit
- 28: Kochfeld
- 30: Kochsystem
- 32: Gargeschirrpositionierungseinheit
- 34: Heizelement
- 36: Bedienerschnittstelle
- 38: Steuereinheit
- 40: Verbraucher
- 42: Induktionseinheit
- 44: Gargeschirrgehäuseeinheit
- 46: Lebensmittelaufnahmeraum
- 48: Gargeschirrbefestigungselement
- 50: Fixierungselement
- 52: Verbindungselement
- 54: Lagerungseinheit
- 56: Schwenkachse
- 58: Längserstreckung
- 60: Abstand

## Patentansprüche

1. Matrix-Kochfeld mit zumindest einer Kochfeldvorrichtung (10a-e) mit zumindest einer Positionierungseinheit (12a-e), die dazu vorgesehen ist, in wenigstens einem Betriebszustand eine bevorzugte Aufstellposition (14a-e) zumindest eines Gargeschirrs (16a-e) auf einer Kochfeldplatte (18a-e) mechanisch festzulegen.

2. Matrix-Kochfeld nach Anspruch 1, **dadurch gekennzeichnet, dass** die Positionierungseinheit (12a-e) zumindest ein Anschlagselement (20a-e) aufweist, das dazu vorgesehen ist, zumindest eine Anschlagsfläche (22a-e) für das Gargeschirr (16a-e) bereitzustellen.

3. Matrix-Kochfeld nach Anspruch 1 oder 2, **dadurch gekennzeichnet, dass** die Positionierungseinheit (12a-e) zumindest ein Befestigungselement (24a-e) aufweist, das dazu vorgesehen ist, das Gargeschirr (16a-e) an der bevorzugten Aufstellposition (14a-e) zu befestigen.

4. Matrix-Kochfeld nach Anspruch 3, **dadurch gekennzeichnet, dass** das Befestigungselement (24a-b; 24e) dazu vorgesehen ist, das Gargeschirr (16a-b; 16e) an der bevorzugten Aufstellposition (14a-b; 14e) mechanisch zu befestigen.

5. Matrix-Kochfeld nach Anspruch 3 oder 4, **dadurch gekennzeichnet, dass** das Befestigungselement (24e) als ein Rastelement ausgebildet ist.

6. Matrix-Kochfeld nach einem der vorhergehenden Ansprüche, **dadurch gekennzeichnet, dass** die Kochfeldvorrichtung die Kochfeldplatte (18b-e) aufweist, an welcher die Positionierungseinheit (12b-e) in wenigstens einem montierten Zustand befestigt ist.

7. Matrix-Kochfeld nach einem der Ansprüche 1 bis 5, **dadurch gekennzeichnet, dass** die Kochfeldvorrichtung die Kochfeldplatte (18a) aufweist, welche wenigstens teilweise einstückig mit der Positionierungseinheit (12a) ausgebildet ist.

8. Matrix-Kochfeld nach einem der vorhergehenden Ansprüche, **dadurch gekennzeichnet, dass**die Kochfeldvorrichtung zumindest eine Versorgungseinheit (26a-e) aufweist, die dazu vorgesehen ist, zumindest einen Verbraucher (40a-e) des an der Aufstellposition (14a-e) aufgestellten Gargeschirrs (16a-e) mit Energie zu versorgen.

9. Kochsystem mit zumindest einem Matrix-Kochfeld (10a-e) nach einem der Ansprüche 1 bis 8 und mit zumindest dem Gargeschirr (16a-e).

10. Gargeschirr für ein Kochsystem (30a-e) nach Anspruch 9, welches zumindest eine Gargeschirrpositionierungseinheit (32a-e) aufweist, die dazu vorgesehen ist, mit der Positionierungseinheit (12a-e) zu kooperieren.

## Claims

1. Matrix hob with at least one hob apparatus (10a-e) with at least one positioning unit (12a-e), which is provided to mechanically specify a preferred placement position (14a-e) of at least one cooking utensil (16a-e) on a hob plate (18a-e) in at least one operating state.

2. Matrix hob according to claim 1, **characterised in that** the positioning unit (12a-e) has at least one end stop element (20a-e), which is provided to provide at least one end stop area (22a-e) for the cooking utensil (16a-e).

3. Matrix hob according to claim 1 or 2, **characterised in that** the positioning unit (12a-e) has at least one fastening element (24a-e), which is provided to fasten the cooking utensil (16a-e) to the preferred placement position (14a-e).

4. Matrix hob according to claim 3, **characterised in that** the fastening element (24a-b; 24e) is provided to mechanically fasten the cooking utensil (16a-b; 16e) to the preferred placement position (14a-b; 14e).

5. Matrix hob according to claim 3 or 4, **characterised in that** the fastening element (24e) is embodied as a latching element.

6. Matrix hob according to one of the preceding claims, **characterised in that** the hob apparatus has the hob plate (18b-e), to which the positioning unit (12b-e) is fastened in at least one assembled state.

7. Matrix hob according to one of claims 1 to 5, **characterised in that** the hob apparatus has the hob plate (18a), which is embodied at least partially in one piece with the positioning unit (12a).

8. Matrix hob according to one of the preceding claims, **characterised in that** the hob apparatus has at least one supply unit (26a-e), which is provided to supply at least one consumer (40a-e) of the cooking utensil (16a-e) placed at the placement position (14a-e) with energy.

9. Cooking system with at least one matrix hob (10a-e) according to one of claims 1 to 8 and with at least one cooking utensil (16a-e).

10. Cooking utensil for a cooking system (30a-e) according to claim 9, which has at least one cooking utensil positioning unit (32a-e), which is provided to cooperate with the positioning unit (12a-e).

## Revendications

1. Table de cuisson à matrice avec au moins un appareil de table de cuisson (10a-e) ayant au moins une unité de positionnement (12a-e) prévue pour fixer mécaniquement dans au moins un état de fonctionnement la position d'installation (14a-e) préférée d'au moins un récipient de cuisson (16a-e) sur une plaque de table de cuisson (18a-e).

2. Table de cuisson à matrice selon la revendication 1, **caractérisée en ce que** l'unité de positionnement (12a-e) comprend au moins un élément de butée (20a-e) prévu pour fournir au moins une surface de butée (22a-e) pour le récipient de cuisson (16a-e).

3. Table de cuisson à matrice selon la revendication 1 ou 2, **caractérisée en ce que** l'unité de positionnement (12a-e) comprend au moins un élément de fixation (24a-e) prévu pour fixer le récipient de cuisson (16a-e) sur la position d'installation (14a-e) préférée.

4. Table de cuisson à matrice selon la revendication 3, **caractérisée en ce que** l'élément de fixation (24a-b; 24e) est prévu pour fixer mécaniquement le récipient de cuisson (16a-b; 16e) sur la position d'installation (14a-b; 14e) préférée.

5. Table de cuisson à matrice selon la revendication 3 ou 4, **caractérisée en ce que** l'élément de fixation (24e) est réalisé en forme d'élément d'encliquetage.

6. Table de cuisson à matrice selon l'une des revendications précédentes, **caractérisée en ce que** l'appareil de table de cuisson comprend la plaque de table de cuisson (18b-e) sur laquelle l'unité de positionnement (12b-e) est fixée dans au moins un état assemblé.

7. Table de cuisson à matrice selon l'une des revendications 1 à 5, **caractérisée en ce que** l'appareil de table de cuisson comprend la plaque de table de cuisson (18a), laquelle est réalisée au moins en partie d'un seul tenant avec l'unité de positionnement (12a).

8. Table de cuisson à matrice selon l'une des revendications précédentes, **caractérisée en ce que** l'appareil de table de cuisson comprend au moins une unité d'alimentation (26a-e) prévue pour alimenter en énergie au moins un utilisateur (40a-e) du récipient de cuisson (16a-e) installé sur la position d'installation (14a-e).

9. Système de cuisson avec au moins une table de cuisson à matrice (10a-e) selon l'une des revendications 1 à 8 et avec au moins le récipient de cuisson (16a-e).

10. Récipient de cuisson pour un système de cuisson (30a-e) selon la revendication 9, lequel comprend au moins une unité de positionnement du récipient de cuisson (32a-e) prévue pour coopérer avec l'unité de positionnement (12a-e).
